# DEMANDE DE BREVET EUROPEEN

(11) **EP 1 178 379 A1**
(43) Date de publication de la demande: **06.02.2002**
(21) Numéro de dépôt: 01117573.4
(22) Date de dépôt: 20.07.2001
(51) Int. Cl.: G05B 19/4062, H02P 8/36

(54) **Procédé et dispositif de détection du blocage d'un moteur pas à pas**

(30) Priorité: 03.08.2000 FR 0010249
(71) Demandeur: VALEO CLIMATISATION, 78321 La Verrière (FR)
(72) Inventeur: Grendene, Bruno, 78321 La Verrière (FR)
(74) Mandataire: Gérard, Michel

(57) **Abrégé**

L'invention concerne un procédé de détection du blocage d'un moteur pas à pas triphasé présentant trois bobines, caractérisé en ce que le moteur pas à pas ayant ses bobines connectées en mode étoile, avec une borne commune (P), il met en oeuvre une détection d'un dit blocage du rotor du moteur (M), en alimentant électriquement deux desdites bobines (A, B) de manière à ce qu'elles soient parcourues par un courant, et en mesurant la tension à une borne d'extrémité de la troisième bobine (C). Une comparaison de la tension mesurée est effectuée avec au moins un seuil donné.

## Description

La présente invention concerne un procédé et un dispositif de détection de blocage d'un moteur électrique pas à pas triphasé.

Elle s'applique notamment, mais non exclusivement, aux applications de ce type de moteur dans l'automobile et plus particulièrement pour leur montage sur les volets mécanique de contrôle de flux d'air dans les systèmes de climatisation.

Il s'avère que les moteurs pas à pas effectuent généralement dans leur fonction un mouvement limité entre deux positions extrêmes appelées butées.

Il est important pour des problèmes de bruit et d'usure de la cinématique qu'une position de butée soit détectée afin de ne plus poursuivre le mouvement.

En plus d'un forçage sur la position limite de butée, cela peut engendrer lorsque le couple est relâché brusquement, un rebond sur la butée de l'élément entraîné par le moteur pas à pas, par exemple un volet de contrôle de flux d'air. La fonction d'étanchéité n'est plus alors assurée.

La détection de butée permet également de s'assurer de la présence du volet à cette position limite et d'effectuer un auto-calage, c'est-à-dire qu'elle permet de préciser la position instantanée.

En effet, les moteurs pas à pas sont couramment utilisés aujourd'hui en boucle ouverte. On ne fait qu'envoyer un séquencement pour positionner l'actionneur constitué par le rotor du moteur. Mais on ne peut pas garantir que celui-ci est effectivement dans la position souhaitée. Il peut se produire une perte de pas due à un blocage de la cinématique par exemple.

Une détection de butée permet de connaître l'arrivée de l'actionneur entraîné par le moteur du volet dans ses deux positions extrêmes et donc de re-synchroniser la commande à la position réelle de l'élément entraîné. Aujourd'hui cette compensation de perte de pas se fait dans la plupart des cas en envoyant une commande pour un positionnement à 105% (100% correspondant à la mise en butée si l'actionneur est correctement positionné sans perte de pas). Ceci rattrape à chaque fois 5% de la course sur des pertes de pas éventuelles, mais cela génère du bruit par forçage en butée à cause de cette course de 5% supplémentaire. De plus, cette méthode ne peut compenser rapidement une grande perte de pas.

Il est donc souhaitable de modifier la détection de butée afin d'améliorer la situation actuelle.

Des dispositifs existent aujourd'hui pour détecter la butée. Néanmoins, ils ne sont appliqués qu'aux moteurs classiques unipolaires (4 bobines) et bipolaires (2 bobines).

Ces dispositifs ne permettent donc pas d'obtenir une mise en oeuvre de l'opération de détection de butée avec un moteur pas à pas triphasé.

Un premier but de l'invention est un procédé et un dispositif s'appliquant à un nouveau type de moteur pas à pas triphasé (3 bobines).

Un autre but de l'invention est d'obtenir une détection de butée efficace et à faible coût, et en particulier de réaliser une détection de butée à l'aide d'une électronique simple et facile à mettre en oeuvre, avec un faible coût, et plus particulièrement de permettre un report de l'électronique sur l'actionneur, ce qui augmente les performances du système et répond au problème de surcharge des ressources du dispositif central (micro-contrôleur ou circuit "ASIC" par exemple) qui pilote les actionneurs.

Un autre but de l'invention est de permettre de détecter le blocage du rotor du moteur plutôt que les effets induits intervenant après le rebond sur la butée de l'élément entraîné par le rotor de l'actionneur.

Un autre but de l'invention est de permettre de contourner les problèmes gênant la détection, à l'aide de moyens informatiques.

Un autre but de l'invention est d'obtenir une détection de butée avec une compensation de l'influence des variations de tension d'alimentation sur cette détection.

Au moins un des buts de l'invention est obtenu à l'aide d'un procédé de détection du blocage d'un moteur pas à pas triphasé présentant trois bobines, caractérisé en ce que le moteur pas à pas, ayant ses bobines connectées en mode étoile, avec une borne commune il met en oeuvre une détection d'un dit blocage du rotor du moteur, en alimentant électriquement deux desdites bobines de manière à ce qu'elles soient parcourues par un courant, et en mesurant la tension à une borne d'extrémité de la troisième bobine, ainsi qu'en effectuant une comparaison de la tension mesurée avec au moins un seuil donné.

Ladite comparaison peut être effectuée avec un seuil maximal et/ou un seuil minimal.

Le procédé peut être caractérisé en ce que les bobines sont alimentées à partir de leur borne opposée à ladite borne commune, et en ce que, pour effectuer ladite détection, une première borne est portée à une première tension d'alimentation, une deuxième borne est portée à une deuxième tension d'alimentation, et une troisième borne est couplée à un dispositif de mesure de tension.

Ladite mesure peut être réalisée par échantillonnage.

Cet échantillonnage peut être réalisé de manière décalée dans le temps par rapport à une commande de pas de moteur pour éviter les pics dus à la commutation vers l'état de haute impédance, ledit décalage étant choisi de manière à identifier un blocage de rotor de moteur. Le signal représentatif du blocage de rotor précédent les signaux correspondant à un rebond éventuel d'un élément entraîné par le moteur, par exemple un volet. De ce fait, la détection de butée est plus précoce et devient plus indépendante de l'élément entraîné par le moteur.

L'invention concerne également un dispositif de détection du blocage d'un moteur pas à pas triphasé, caractérisé en ce qu'il comporte :
- un module électronique d'alimentation du moteur en mode étoile,
- un module électronique de détection de blocage pour alimenter deux bobines du moteur de telle sorte qu'elles soient parcourues par un courant alors qu'une troisième bobine est couplée à une entrée de mesure du module électronique.

Le module électronique d'alimentation et/ou le module électronique de détection peuvent être pilotés par un dispositif tel qu'un micro-contrôleur associé au moteur pas à pas. Le micro-contrôleur reçoit d'un micro-contrôleur central de commande, des signaux, par exemple de commande de position du moteur, et génère la commande de pas et/ou la détection de butée.

La figure 1 représente schématiquement un moteur tri-phasé, avec son électronique de pilotage.

La figure 2 symbolise un état des commandes et le passage de courant au travers des 3 bobines de ce moteur.

La figure 3 symbolise un état des commandes et le passage de courant, à travers deux bobines seulement, avec mise en oeuvre d'un niveau de haute impédance pour la troisième bobine.

La figure 4 illustre schématiquement les différents états (représentés aux figures 2 et 3) à enchaîner de 1 à 12 pour pouvoir faire tourner le moteur.

La figure 5 illustre schématiquement le dispositif du moteur tri-phasé, avec une autre électronique de pilotage.

La figure 6 illustre schématiquement la forme caractéristique du signal au niveau de la commande de la bobine, lors de la commutation d'un état fixé à un état de haute impédance.

La figure 7 illustre schématiquement l'électronique de pilotage.

La figure 8 montre la forme des signaux avec et sans détection de butée, ainsi que le ou les seuils de détection.

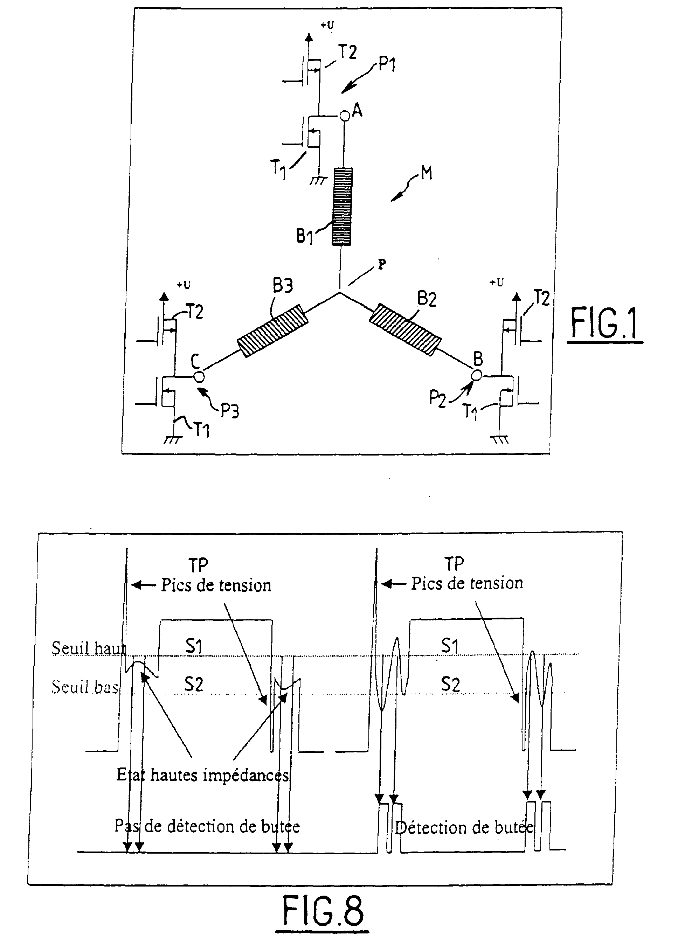

La figure 1 montre un moteur tri-phasé M sur lequel on peut appliquer le procédé. Le moteur est composé de trois bobines B1 à B3 de même impédance, reliées en un point milieu P et disposées en étoile. Le passage de courant à travers ces bobines est réalisé par trois demi-ponts en « H » P1 à P3, composé chacun de deux transistors T1 et T2 : l'un T1 pour une commande à la masse et l'autre T2 pour une commande à la tension d'alimentation U de chacun des demi-ponts P1 à P3.

La figure 2 montre l'état des 3 commandes pour faire passer le courant dans les trois bobines B1 à B3 du moteur M représenté dans sa configuration de la figure 1. Deux demi-ponts (par exemple P2 et P3) sont mis à la masse et le troisième (P1 dans ce cas) à la tension d'alimentation U.

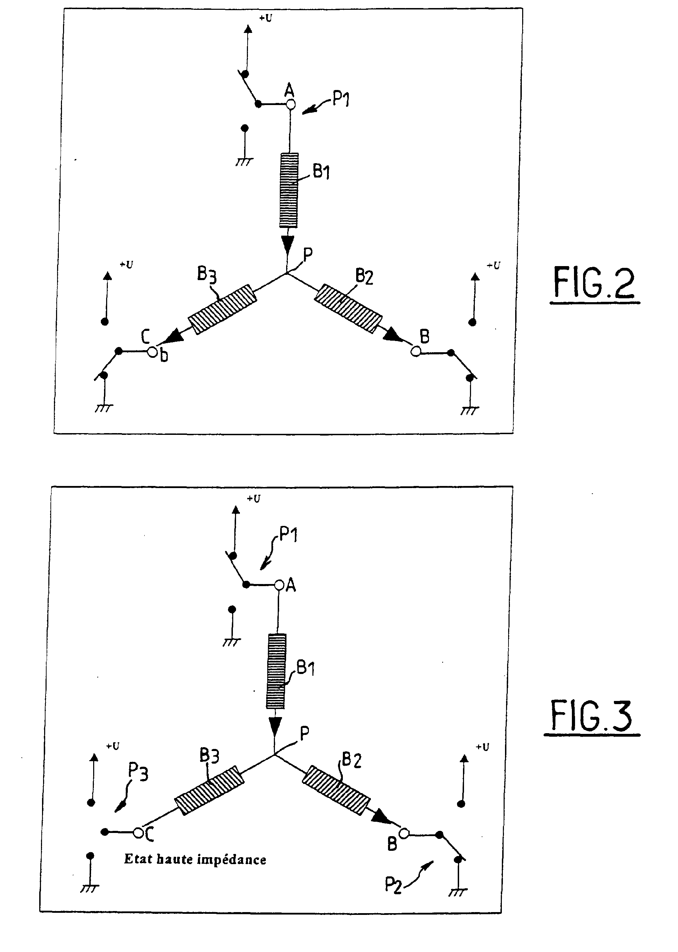

La figure 3 représente le même moteur, mais dans un état ou le courant ne passe que dans 2 des 3 bobines. Dans cette configuration, un demi-pont, par exemple P1 est porté à la tension U, un demi-pont, par exemple P2 est mis à la masse, et le troisième, donc P3 est placé en état de haute impédance, et n'est pas traversée par un courant.

Lorsque aucun des transistors T1, T2 d'un demi-pont ici, P3 n'est commandé, la bobine correspondante B3 n'a plus de niveau de tension imposé par sa commande et sa borne C opposée au point milieu P est dans ledit état de haute impédance. La tension présente à cette borne C devient représentative du niveau de tension au point milieu P.

Dans ce cas de figure, appelé haute impédance au niveau de la commande, on peut visualiser, via la bobine qui n'est plus commandée (B3 dans l'exemple ci-dessus) le comportement deux autres bobines (B1, B2) au point milieu P.

C'est à partir de cet état que l'on peut analyser le signal et détecter la présence d'une butée.

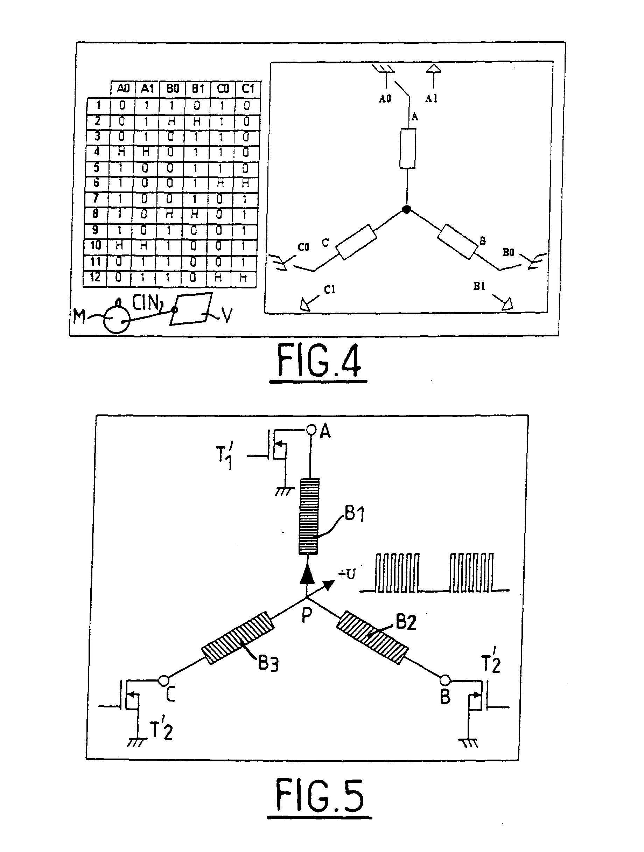

La figure 4 montre dans quel état doivent être les transistors T1 et T2 des différents demi-ponts pour que le rotor du moteur M se mette à tourner et entraîne par l'intermédiaire d'une cinématique (CIN) un ou plusieurs, éléments par exemple un volet V. Les états portant un nombre impair sont conforment à l'état de la figure 2, alors que les états ayant un nombre pair sont conformes à l'état de la figure 3. La lettre H, symbolise un état de haute impédance de la commande d'une bobine, 0 représente une mise à la masse, +U représente une mise au niveau de la tension d'alimentation.

On peut échantillonner la détection de mise en butée par exemple tous les six pas de commande du moteur M.

Le choix d'une seule bobine (par exemple B3) est suffisant pour faire une détection de butée. Le choix de la bobine réalisé, on analyse par logiciel le signal présent sur la commande de celle-ci, lorsqu'elle est en haute impédance. A cet effet, on couple électriquement la borne C de la bobine B3, sur laquelle est disponible ce signal, à une électronique d'analyse comprenant un logiciel approprié.

La figure 5 représente une autre façon de piloter le moteur. Cette fois ci, le point milieu reçoit la tension d'alimentation du moteur. Chacune des bornes A, B, C des bobines B1, B2, B3 est couplée à un transistor respectivement T'1, T'2, T'3. Un état de haute impédance est obtenu en portant la borne B de deux bobines (par exemple B1 et B2) au potentiel de masse, la borne C de B3 étant alors dans un état de haute impédance.

Par contre, dans les deux cas, il est possible que la tension d'alimentation se présente sous forme d'un train d'impulsions, par exemple de modulation par largeur d'impulsions (PWM). La fréquence de ce train gêne l'analyse de la détection de butée. Il faut dans ce cas interrompre le train d'impulsions du à la commutation sur la bobine et générer un état de haute impédance sur la bobine choisie, et réaliser la détection pendant un laps de temps nécessaire à l'échantillonnage de la tension servant à l'analyse. Ce temps d'environ 2 milli-secondes, par exemple toutes les 100 ms pour un moteur commandant un volet, ne perturbe en rien le pilotage, ni les performances du moteur M. L'intervalle entre deux échantillonnages est choisi pour permettre une détection de mise en butée du rotor du moteur M..

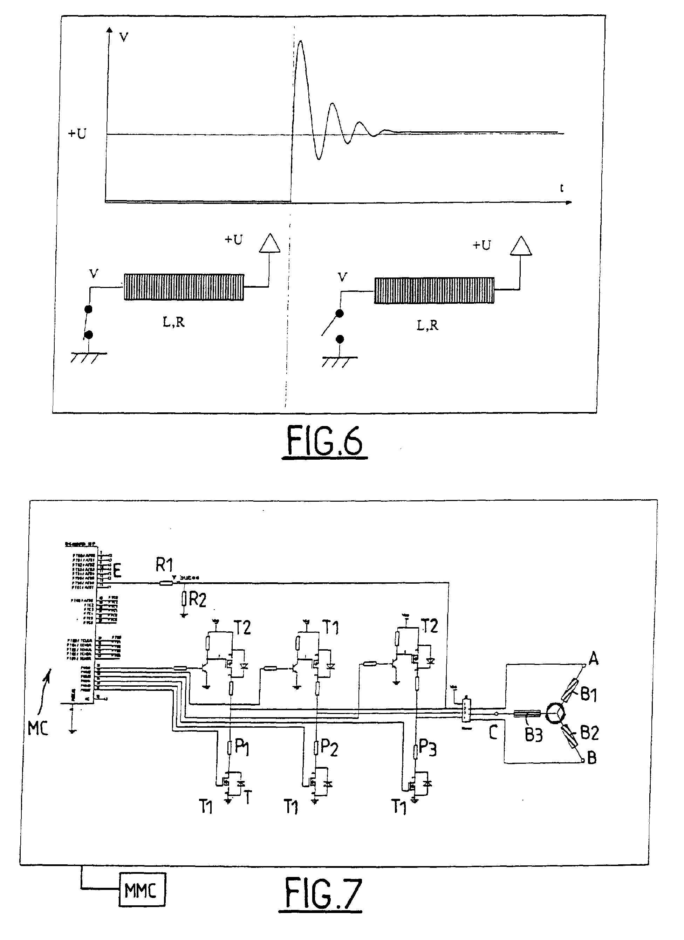

La figure 6 montre la forme de la tension lors d'une commutation vers un état de haute impédance (figure 3 ou figure 6). Une butée n'est jamais parfaite, dans le sens ou il ne se produit jamais de choc « mou ». Il se produit un rebond mécanique. Celui-ci est d'autant plus important sur un système de climatisation du fait des lèvres d'étanchéité. Elles constituent un système élastique. Lorsque le volet arrive en butée, il arrive un moment où le moteur M ne peut plus lutter contre l'effet de ressort du à cette élasticité de la butée. Le volet est donc renvoyé dans le sens opposé au sens de pilotage, ce qui produit une oscillation au niveau du moteur M. L'énergie mécanique emmagasinée génère une force électro-motrice induite qui produit une tension sinusoïdale. Cette tension sinusoïdale ainsi générée est visible au niveau de la tension de pilotage (Cf. figure 8).

Dans un tel cas, on peut relâcher le couple appliqué au moteur M, par exemple en modifiant progressivement le rapport cyclique de la commande par largeur d'impulsions (PWM).

La figure 7 représente l'électronique associée à la détection de butée. La bobine B1 a son fil de commande relié à un pont diviseur de tension (R1, R2). Ce pont sert à ramener le niveau du signal à un niveau acceptable pour que l'électronique d'analyse ne soit pas endommagée (sous +5 Volts) et ce dans le pire des cas (U = +16 volts). Ce pont est raccordé à une entrée analogique E d'un dispositif de commande, tel qu'un micro-contôleur local MC, affecté au moteur M et qui est l'élément électronique de traitement du signal issu de ce pont.

En intégrant cette électronique MC directement sur le moteur M et la reliant par bus à un dispositif de pilotage par exemple un micro-contrôleur MMC qui supervise l'application, par exemple une installation de chauffage et/ou climatisation, on répond au problème de surcharge de ce dispositif de pilotage. En effet, on n'informe le superviseur de système MMC par l'intermédiaire du bus, que lorsque la butée est détectée. Réciproquement, le micro-contrôleur de supervision MMC n'envoie que l'ordre de commande de positionnement du moteur M, mais pas tout le séquencement des pas, qui est généré localement par le micro-contrôleur MC..

La figure 8 montre la forme du signal dans les 2 cas, où le moteur est en butée et quand il ne l'est pas. Le micro-contôleur MC compare les niveaux de tension de la bobine à un ou deux seuils S1 et/ou S2 lorsque la commande est en haute impédance. Dans les deux cas, des pics de transitions TP se produisent. Ces pics passent les seuils d'analyse S1 et/ou S2. Il faut donc procéder à l'échantillonnage de ces signaux après le passage de ces pics TP. Ce temps d'attente est fonction des impédances des différents éléments.

Lorsque que le seuil haut est dépassé et/ou le seuil bas franchit, la détection de butée est signalée. Ces seuils doivent être choisis pour qu'ils soient significatifs. Ils sont déterminés par expérimentation. On peut lancer plusieurs échantillonnages pendant chaque état de haute impédance.

Il faut néanmoins compenser le fait que la tension d'alimentation peut varier indépendamment d'un blocage en butée, car il est résulte une variation des niveaux de tension de seuil. Il faut donc ajuster le ou les niveau(x) de tension de seuil en fonction de la tension d'alimentation du moteur. Plus le niveau d'alimentation est haut, plus le seuil haut devra être augmenté et le seuil bas baissé, par exemple en ajustant la tension de seuil proportionnellement à la tension d'alimentation.

En cas de détection de blocage, il est possible d'agir sur la commande du moteur, pour l'atténuer ou bien la supprimer. On peut agir par exemple sur le couple du moteur, notamment en modifiant progressivement le rapport cyclique dans le cas d'une commande modulée par largeur d'impulsions (PWM), ou bien suspendre temporairement la commande du moteur. Ceci permet d'éviter le rebond ou d'atténuer celui-ci, et éventuellement de diminuer l'effet oscillatoire sur le moteur proprement dit.

## Revendications

1. Procédé de détection du blocage d'un moteur pas à pas triphasé présentant trois bobines, **caractérisé en ce que** le moteur pas à pas (M) ayant ses bobines connectées en mode étoile, avec une borne commune (P), il met en oeuvre une détection d'un dit blocage du rotor du moteur, en alimentant électriquement deux desdites bobines (A, B) de manière à ce qu'elles soient parcourues par un courant, et en mesurant la tension à une borne d'extrémité de la troisième bobine (C), ainsi qu'en effectuant une comparaison de la tension mesurée avec au moins un seuil donné (S1, S2).

2. Procédé selon la revendication 1, **caractérisé en ce que** ladite comparaison est effectuée avec un seuil maximal (S1).

3. Procédé selon une des revendications 1 ou 2, **caractérisé en ce que** ladite comparaison est effectuée avec un seuil minimal (S2).

4. Procédé selon une des revendications 1 à 3, **caractérisé en ce que** les bobines sont alimentées à partir de leur borne (A, B, C) opposée à ladite borne commune (P), et **en ce que**, pour effectuer ladite détection, une première borne (A) est portée à une première tension d'alimentation, une deuxième borne (B) est portée à une deuxième tension d'alimentation, et une troisième borne (C) est couplée à un dispositif de mesure de tension.

5. Procédé selon une des revendications précédentes, **caractérisé en ce que** ladite mesure de tension est effectuée par échantillonnage.

6. Procédé selon la revendication 5, **caractérisé en ce que** l'échantillonnage est réalisé de manière décalée dans le temps avec une commande de pas du moteur, ledit décalage étant choisi de manière à identifier un blocage du rotor du moteur (M), en évitant les pics de commutation (TP).

7. Procédé selon une des revendications précédentes, **caractérisé en ce que** ledit blocage du moteur est une mise en butée d'un élément entraîné par celui-ci.

8. Procédé selon la revendication 7, **caractérisé en ce qu'**il met en oeuvre un ajustement d'au moins un seuil (S1, S2) en fonction d'une tension d'alimentation du moteur.

9. Procédé selon un des revendications précédentes, **caractérisé en ce qu'**en cas de détection de blocage, la commande du moteur (M) est atténuée, ou bien supprimée.

10. Dispositif de détection du blocage d'un moteur pas à pas triphasé, **caractérisé en ce qu'**il comporte
- un module électronique d'alimentation du moteur en mode étoile,
- un module électronique de détection de blocage pour alimenter deux bobines (A, B) du moteur (M) de telle sorte qu'elles soient parcourues par un courant alors qu'une troisième bobine est couplée à une entrée de mesure du module électronique.

11. Dispositif selon la revendication 10, **caractérisé en ce que** le module électronique d'alimentation et/ou le module électronique de détection soient pilotés par un dispositif de commande associé au moteur pas à pas.
